# EUROPEAN PATENT SPECIFICATION

(11) **EP 1 977 144 B1**
(45) Date of publication and mention of the grant of the patent: **03.03.2010**
(21) Application number: 07705042.5
(22) Date of filing: 26.01.2007
(51) Int. Cl.: F16H 57/02, B23K 33/00, F16H 48/06, B23K 101/00

(54) **DIFFERENTIAL GEAR ASSEMBLY**
DIFFERENTIALGETRIEBEBAUGRUPPE
ENSEMBLE DIFFERENTIEL

(30) Priority: 27.01.2006 GB 0601720
(43) Date of publication of application: 08.10.2008
(73) Proprietor: Meritor Heavy Vehicle Systems Cameri SpA, Cameri (Novara) 28062 (IT)
(72) Inventor: GIANONE, Roberto, I-28010 Barengo (NO) (IT); KVRGIC, Milenko, SE-71134 Lindesberg (SE); KALAOUI, Hussein, Michigan 48084 (US)
(74) Representative: Jones, John Bryn
(86) International application number: PCT/GB2007/000273
(87) International publication number: WO 2007/085848

(56) References cited:
- EP-A- 1 719 572
- AT-U1- 3 253
- DE-A1- 4 042 173
- DE-A1- 10 238 236
- FR-A- 2 343 403
- JP-A- 6 109 085
- JP-A- 2005 081 351
- US-A1- 4 125 026
- US-A1- 2001 030 224

## Description

This invention relates to the differential gear assembly of a motor vehicle, and particularly to an assembly in which the crown wheel and differential casing are welded together to form a unitary assembly.

As is well known a differential gear assembly of a motor vehicle comprises a casing in which planetary and output gears rotate in mesh to permit opposite wheels of an axle to turn at different speeds. The casing is mounted for rotation in an axle housing, and is driven by a crown wheel fixed on the casing and itself driven by the vehicle engine.

Hitherto it has been common for an annular crown wheel to be bolted to the differential casing. One reason for this construction is to ensure that the input ratio of the differential can be selected at the time of manufacture; other reasons are to ensure that the crown wheel can be replaced as a service item, and that the cost of a one piece component is very high.

Permanent welding of the crown wheel to the differential casing offers the possibility of cost reduction if the advantages of selection and serviceability are not required. Other advantages are potential weight reduction and more compact design. However, the crown wheel is case hardened after final machining whereas the differential casing is of e.g. forged steel. Although welding of case hardened steel to relatively soft forged steel is possible, using filler material such as nickel, the weld quality is difficult to control, and the welding process is expensive. As an alternative it has been proposed to hard turn or grind through the case hardening of the crown wheel to the relatively soft core so as to expose material suitable for welding, but this is also time consuming and expensive.

It has also been proposed to machine the mounting face of the crown wheel as an outward stepped form before hardening, so as to ease removal of the hard case. However this is also disadvantageous because, typically, the crown wheel must be press-quenched during the hardening process to prevent warping thereof, and the stepped form requires centring of a press tool and a mounting fixture which is time consuming and difficult to achieve with reliability. This problem is exacerbated because the crown wheel is immersed in oil during quenching, and thus difficult if not impossible to observe. This latter problem is also particularly troublesome in relation to truck axles, where numerous final drive ratios may be provided for use with a common differential gear assembly. Thus, for example 12 different ratios (meaning 12 different crown wheels) are provided, each of which requires a respective mounting fixture during press-quenching. If the wrong fixture is used, at least the crown wheel will be made unusable, and possibly the fixture and/or press tool will be damaged.

DE-A-10238236, which shows all the features of the preamble of independent claim 1, discloses a construction in which the crown wheel is welded to the differential housing by means of a radially applied weld. For this reason the back face of the crown wheel is cut away to give access for the welding tool, and is not flat. The same technique is used at the radial weld of the differential housing and cover, so that the housing is cut away (or relatively extended) in the axial direction.

What is required is a solution to the aforementioned difficulties, so as to facilitate welding of the crown wheel and differential casing.

According to a first aspect of the invention there is provided a welded assembly of a differential casing and crown wheel, said casing having a rotational axis and a generally radially extending circular flange, said flange having an axially protruding lip at the periphery thereof, and said crown wheel having a circular recess for engagement with said lip at an interface, wherein said recess extends radially outwardly of said lip to expose the radially outer side of said interface for welding.

This arrangement allows the radial face of the crown wheel to be flat during press-quenching, yet minimises hard machining of the interface. Thus since all of the relevant crown wheels can have such a flat face, the problem of fixture and press location during quenching is obviated. In one embodiment of the invention the lip and recess define at the radially outer side substantially perpendicular circular faces, and welding is by high energy beam bisecting the angle between said faces. The crown wheel is sufficiently supported to ensure that gear thrust thereon is resisted.

In the preferred embodiment, said crown wheel comprises a flat annular face perpendicular to rotational axis thereof, and said recess comprises a concentric circular groove therein. The groove divides said face into concentric annular face portions which preferably have substantially similar radial extent.

In a preferred embodiment said interface is at an oblique angle to said axis, preferably in the range 50°-80°, and most preferably in the range 60°-70° to said axis. Said interface is preferably constituted by opposing flat circular faces of said casing and crown wheel.

At the radially inner side said interface is preferably bounded by a circular wall at an oblique angle to said flange, which in the preferred embodiment is in the range 25°-35° and most preferably 30°.

In one embodiment the radially outer side of said interface comprises respective perpendicular surfaces of crown wheel and casing. Preferably said crown wheel is further recessed radially outboard of said interface so that the radially outer side of said interface is axially inboard of the flat annular face of the crown wheel.

In an alternative embodiment, the lip and recess together define at the radially outer side of the interface, a substantially co-planar circular face. Preferably said co-planar face is at an angle to said axis, typically 30°, so as to present an oblique face to a welding beam of high energy. The face is frusto-conical with respect to the rotational axis.

In such an embodiment, the circular recess comprises a double indent substantially of 'W' section, the central peak of which comprises on one side said interface, and on the other side a portion of said oblique face.

In the preferred embodiment the radially inner side of said recess is spaced from the corresponding side of said lip so as to define a circular clearance of limited axial extent.

Other features of the invention will be apparent from the following description of preferred embodiments shown by way of example in the accompanying drawings in which:-
Fig. 1 shows in transverse section a differential casing and crown wheel assembly.
Fig. 2 shows the weld region of Fig. 1 in enlarged detail.
Fig. 3 is a transverse section through the crown wheel of Fig. 1.
Fig. 4 shows the profile of the weld region of Fig. 3 in enlarged detail.
Fig. 5 is a partial transverse section through the differential casing of Fig. 1.
Fig. 6 illustrates a radial section, the arrangement of Figs. 1-5.
Fig. 7 corresponds to Fig. 5 and shows an alternative profile.
Fig. 8 is a scrap section showing the component parts of Fig. 7.
Fig. 9 shows in scrap section a weld profile for the embodiment of Fig. 6.
Fig. 10 shows in scrap section a weld profile for the embodiment of Fig. 7.

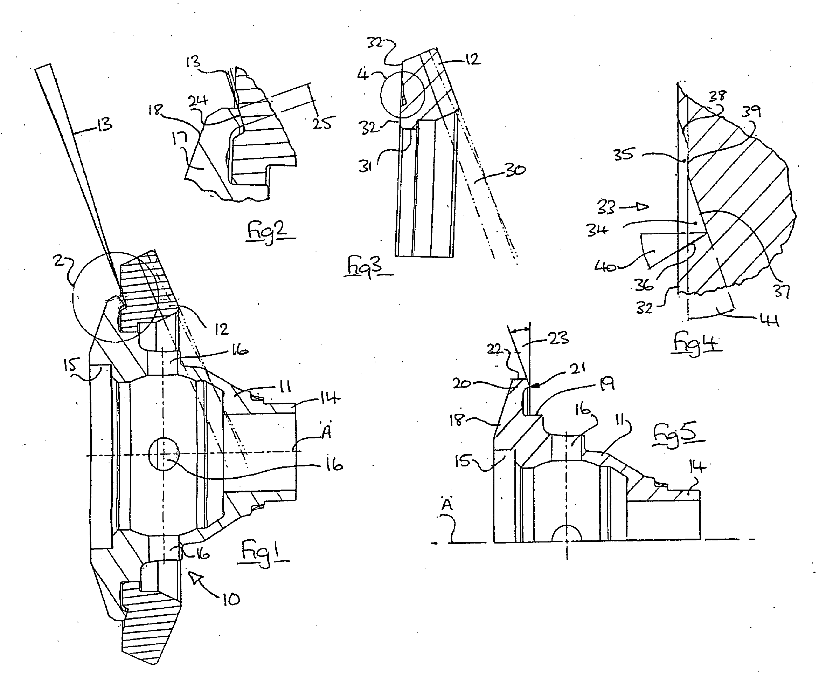

With reference to Fig. 1 a differential gear assembly 10 comprises a casing 11 of forged steel, and a crown wheel 12 of case hardened steel; the casing 11 and crown wheel 12 are welded together in the vicinity identified by circle 2 (and shown in greater detail in Fig. 2) by a laser welding tool of which the laser cone 13 is illustrated.

As shown in Fig. 5, the differential casing 11 is bowl-like and generally symmetrical about rotational axis A. A cylindrical stub 14 defines an inner bearing surface associated with one drive shaft and an outer bearing surface associated with the axle housing. Corresponding surfaces are provided on a circular plug which in use is located in the circular recess 15 opposite the stub 14. The usual planetary gears are rotatable about shafts located in four equispaced apertures 16.

The casing 11 has a circular continuous flange 17 at the mouth thereof, the axially outer periphery 18 of which tapers as illustrated towards the stub side so as to form a generally flat frusto-conical surface.

At the stub side, the flange defines a circular radial shoulder 19 adapted to receive the crown wheel 12 as a close or press fit. The outer portion 20 of the flange 17 projects axially towards the stub side and terminates at a circular knife edge 21 inboard of the radially outer periphery 22. This portion 20 tapers inwardly of the flange from the knife edge 21 to the radially outer periphery 22 at an angle of 20° to the diameter (as represented by numeral 23), thus forming a frusto-conical face 24 having a width 25 of about 10 mm. Other angles, e.g. 30° are possible, and the width 25 may be smaller or greater as required.

As best shown in Fig. 2, the crown wheel 12 when assembled onto the casing 11 is in contact with the face 24, but axially clear of the casing inboard of the face 24.

The crown wheel 12 comprises an annulus having a gear form thereon, (typically hypoid or spiral bevel) and represented by chain-dot lines 30. The chain-dot lines represent pitch angle, face angle and root angle of the gear teeth. The inner diameter comprises an axially directed circular face 31 adapted to fit with the shoulder 19. At the axial side opposite the gear teeth, the crown wheel has a radial face 32 with a circular groove 33 machined therein after hardening.

The radial face 32 is thus flat during hardening, and accordingly is adapted for application of a press tool thereto during press-quenching, without the need for a location step. After hardening the groove 33 is machined by hard turning to reveal the relatively soft core.

The groove 33 has an advantageous form, best illustrated in Fig. 4, and comprising a radially innermost major recess 34 and a radially outermost minor recess 35.

The major recess is a generally triangular section having the walls 36, 37 at an obtuse included angle of for example 100°, and arranged at about 30° to the inner side of the radial face 32. The respective walls 36, 37 are represented by the angles marked with numerals 40 and 41.

The minor recess comprises a radially outer wall 38 preferably parallel to the wall 37, and a true radial wall 39 linking to the wall 37, so that the profile of the generally radially directed face 37, 38, 39 is stepped as illustrated.

As will be apparent, the faces 24 and 37 are in planar contact on assembly of the components, as illustrated in Fig. 1. The minor recess 35 allows unimpeded access for the laser cone 13 to form a circular weld around the flange 17 at the component interface. Since the faces 37, 38 are at the same relative angle, both can readily be formed in a straightforward plunge and turn machining operation with a suitable form tool.

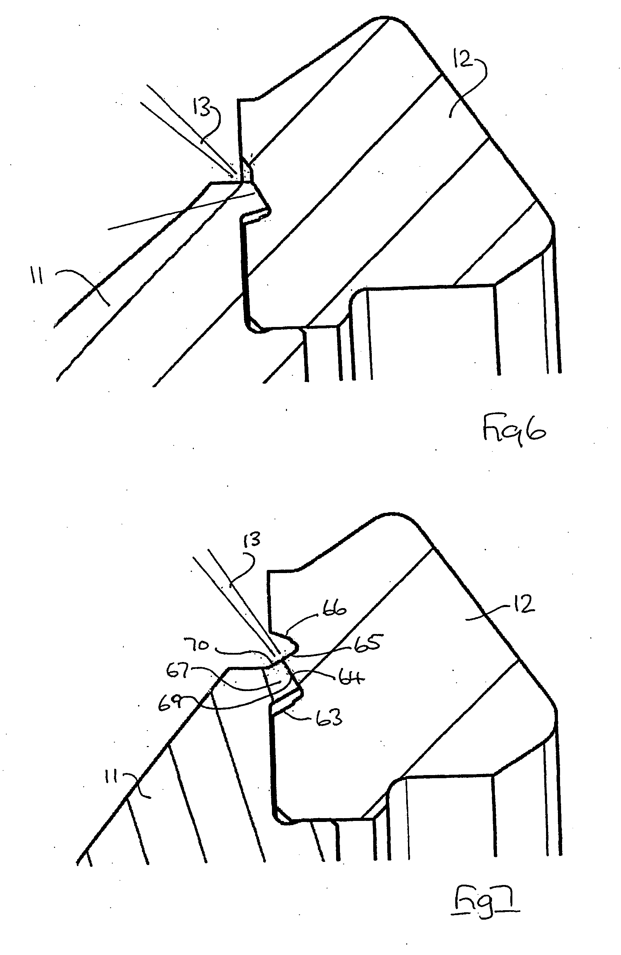

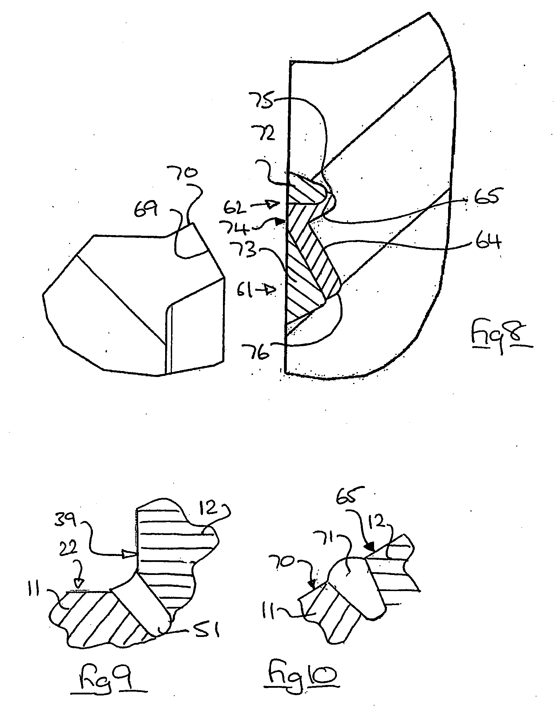

Fig. 6 illustrates the general arrangement described in relation to Figs. 1-5, in which a differential casing 11 is connected to a crown wheel 12 via a laser weld beam 13. The resulting weld 51 is illustrated in Fig. 9 and is directed inwardly from the corner at the junction of outer periphery 22 and radial wall 39.

An alternative engagement profile is illustrated in Figs. 7 and 8. As is readily apparent from Fig. 7, the circular groove formed in the radial face of the crown wheel is generally of 'W' form, and comprises a radially inner recess 61, and a radially outer recess 62.

The inner recess generally corresponds to the recess 34 and is of triangular form having walls 63, 64 arranged at an included angle of about 90°. The upper recess 62 is also of triangular form, and has an included angle of about 60° defined by walls 65, 66.

The radially outer periphery 67 of the flange 17 comprises an upturned lip having an orthogonal edge 69 at about 30° to a radius and at a matching angle to the wall 64. Additionally the outer face of the lip 70 is aligned with the radially inner wall 65 so as to present a generally planar circular surface to the laser cone 13.

Fig. 10 illustrates the weld 71 obtained by use of the embodiment of Figs. 7 and 8, which has an advantageous convex outer profile, rather than the concave profile shown in Fig. 9. A convex weld profile has lower risk of stress concentrations, and also reduces localised heating of the crown wheel 12 and casing 11 due to proximity of the laser cone 13. Since localised heating is reduced, the laser weld power required is also reduced as compared with the embodiment of Fig. 9; there is also a reduced risk that crown wheel material radially outside the joint will partially fill the weld and form the less desirable concave profile. A further advantage of the planar face presented by surfaces 65, 70 is that localised beam reflection is minimal, and thus substantially all of the beam energy is used in welding.

The precise shape of the outer recess 62 is not important provided a planar surface is presented substantially orthogonal to the laser cone, and sufficient radially outer clearance for the cone is provided by the wall 66. At the radially inner side suitable clearances are provided to ensure touching contact of the edge 69 and wall 64.

Fig. 8 additionally illustrates an advantageous machining process of the recesses 61, 62. As has been explained above, for purposes of press-quenching during the hardening step, the radial 'back' face 32 of the crown wheel 12 should be 'flat' so that location of a press tool over a protuberance is not required. The location grooves illustrated in Figs. 6 and 7 do not impede press-quenching, because they can be formed by hard turning after the hardening step.

However, the grooves 61, 62 may be partially formed before hardening, i.e. whilst the crown wheel is relatively soft, by removal of the two shaded areas 72, 73 shown in Fig. 8. Thus removal does not impede press-quenching and a land 74 remains between the recesses 72, 73 to provide additional support.

After hardening, the grooves 61, 62 are fully formed by hard machining of the areas 75, 76, but the volume of material to be removed is much reduced, and is restricted to forming of the mating faces 64, 65.

## Claims

1. An assembly of a differential casing (11) and crown wheel (12), said casing having a rotational axis (A) and a generally radially extending circular flange (17), **characterized by** said flange having an axially protruding lip (20; 70) at the periphery thereof, and said crown wheel having a circular recess (34, 35; 61, 62) for engagement with said lip at an interface (24, 37; 69; 64), wherein said recess extends radially outwardly of said lip to expose the radially outer side of said interface for welding.

2. An assembly according to claim 1 wherein the radial face (32) of said crown wheel is flat on the side of said recess.

3. An assembly according to claim 2 wherein said recess divides said face into concentric annular face portions which have substantially similar radial extent.

4. An assembly according to any preceding claim wherein said interface comprises substantially perpendicular circular faces (22, 39) of said lip and recess.

5. As assembly according to any of claims 1-3 wherein said interface is at an oblique angle to said axis and consituted by adjacent coplanar circular faces (70, 65) of said lip and recess.

6. An assembly according to claim 5 wherein said circular recess comprises a double indent substantially of 'W' section, the central peak of which comprises on one side said interface (64), and on the other side a portion (65) of said oblique face.

7. An assembly according to any preceding claim wherein at the radially inner side said interface is bounded by a circular wall (36; 63) at an oblique angle to said flange.

8. An assembly according to any preceding claim wherein said crown wheel is further recessed (35; 62) radially outboard of said interface.

9. An assembly according to any preceding claim wherein the radially inner side of said recess is spaced from the corresponding side of said lip so as to define a circular clearance.

## Patentansprüche

1. Baugruppe aus einem Differentialgehäuse (11) und einem Kronrad (12), wobei das Gehäuse eine Rotationsachse (A) und einen sich allgemein radial erstreckenden kreisförmigen Flansch (17) hat, **dadurch gekennzeichnet, dass** der Flansch an seinem Umfang eine axial vorstehende Lippe (20; 70) hat und das Kronrad eine kreisförmige Ausnehmung (34, 35; 61, 62) zum Eingriff mit der Lippe an einer Schnittstelle (24, 37; 69, 64) hat, wobei sich die Ausnehmung radial außerhalb der Lippe erstreckt, um die radial äußere Seite der Schnittstelle zum Schweißen freizulegen.

2. Baugruppe nach Anspruch 1, wobei die radiale Fläche (32) des Kronrads auf der Seite der Ausnehmung flach ist.

3. Baugruppe nach Anspruch 2, wobei die Ausnehmung die Fläche in konzentrische ringförmige Flächenabschnitte unterteilt, die eine im Wesentlichen ähnliche radiale Ausdehnung haben.

4. Baugruppe nach einem der vorhergehenden Ansprüche, wobei die Schnittstelle im Wesentlichen senkrechte kreisförmige Flächen (22, 39) der Lippe und der Ausnehmung umfasst.

5. Baugruppe nach einem der Ansprüche 1 - 3, wobei sich die Schnittstelle in einem schrägen Winkel zur Achse befindet und aus benachbarten koplanaren kreisförmigen Flächen (70, 65) der Lippe und der Ausnehmung besteht.

6. Baugruppe nach Anspruch 5, wobei die kreisförmige Ausnehmung eine doppelte Vertiefung mit im Wesentlichen W-förmigem Querschnitt umfasst, deren mittlere Spitze auf der einen Seite die Schnittstelle (64) und auf der anderen Seite einen Abschnitt (65) der schrägen Fläche umfasst.

7. Baugruppe nach einem der vorhergehenden Ansprüche, wobei die radial innere Seite der Schnittstelle von einer kreisförmigen Wand (36; 63) in einem schrägen Winkel zu dem Flansch begrenzt wird.

8. Baugruppe nach einem der vorhergehenden Ansprüche, wobei das Kronrad radial außerhalb der Schnittstelle weiter ausgenommen (35; 62) ist.

9. Baugruppe nach einem der vorhergehenden Ansprüche, wobei die radial innere Seite der Ausnehmung zur Definierung eines kreisförmigen Abstands von der entsprechenden Seite der Lippe beabstandet ist.

## Revendications

1. Ensemble de carter de différentiel (11) et couronne (12), ledit carter ayant un axe de rotation (A) et une bride circulaire s'étendant généralement radialement (17), **caractérisé en ce que** ladite bride a une lèvre saillant axialement (20 ; 70) à sa périphérie, et ladite couronne a un retrait circulaire (34, 35 ; 61, 62) destiné à s'engager avec ladite lèvre au niveau d'une interface (24, 37 ; 69, 64), ledit retrait s'étendant radialement vers l'extérieur de ladite lèvre pour exposer le côté radialement extérieur de ladite interface en vue du soudage.

2. Ensemble selon la revendication 1, dans lequel la face radiale (32) de ladite couronne est plate du côté dudit retrait.

3. Ensemble selon la revendication 2, dans lequel ledit retrait divise ladite face en des portions de face annulaire concentriques qui ont substantiellement la même étendue radiale.

4. Ensemble selon l'une quelconque des revendications précédentes, dans lequel ladite interface comprend des faces circulaires substantiellement perpendiculaires (22, 39) de ladite lèvre et dudit retrait.

5. Ensemble selon l'une quelconque des revendications 1 à 3, dans lequel ladite interface est à un angle oblique par rapport audit axe et est constituée par des faces circulaires coplanaires adjacentes (70, 65) de ladite lèvre et dudit retrait.

6. Ensemble selon la revendication 5, dans lequel ledit retrait circulaire comprend une double indentation substantiellement en section transversale en forme de W, dont le pic central comprend sur un côté ladite interface (64), et sur l'autre côté une portion (65) de ladite face oblique.

7. Ensemble selon l'une quelconque des revendications précédentes, dans lequel au niveau du côté radialement interne, ladite interface est bordée par une paroi circulaire (36 ; 63) suivant un angle oblique par rapport à ladite bride.

8. Ensemble selon l'une quelconque des revendications précédentes, dans lequel ladite couronne est davantage rentrée radialement (35 ; 62) à l'extérieur de ladite interface.

9. Ensemble selon l'une quelconque des revendications précédentes, dans lequel le côté radialement interne dudit retrait est espacé du côté correspondant de ladite lèvre de manière à définir un dégagement circulaire.
